# FASCICULE DE BREVET EUROPEEN

(11) **EP 2 166 251 B1**
(45) Date de publication et mention de la délivrance du brevet: **24.07.2013**
(21) Numéro de dépôt: 09290690.8
(22) Date de dépôt: 10.09.2009
(51) Int. Cl.: F16G 1/10, F16G 5/08, F16G 1/28, F16G 1/20

(54) **Courroie de transmission de puissance**
Treibriemen
Power transmission belt

(30) Priorité: 23.09.2008 FR 0805236
(43) Date de publication de la demande: 24.03.2010
(73) Titulaire: Hutchinson, 75008 Paris (FR)
(72) Inventeur: Cretin, Jean-Loup, 58180 Marzy (FR); Rognon, Julie, 37540 St Cyr sur Loire (FR); Tricoche, Denis, 37300 Joue le Tours (FR); Varin, Hervé, 37300 Joue les Tours (FR)
(74) Mandataire: Corret, Hélène

(56) Documents cités:
- EP-A1- 0 549 401
- EP-A1- 1 154 171
- EP-A1- 1 696 150
- WO-A2-2007/099233
- JP-A- 2007 170 454
- US-A- 3 964 328
- US-A1- 2004 048 708
- US-B2- 7 128 674

## Description

La présente invention a pour objet une courroie de transmission de puissance dont le contour externe des dents comporte un matériau non tissé.

Les moteurs à combustion interne tournent selon une loi quasi-sinusoïdale autour de leur vitesse nominale. Cette variation est liée aux combustions successives dans les cylindres. Ce phénomène typique des moteurs à combustion interne appelé acyclisme est d'autant plus significatif que le taux de compression est élevé (diesel) et le nombre de cylindres réduit. Cet acyclisme de la vitesse du moteur se transmet aux accessoires tels que pompe à eau, direction assistée, climatisation, alternateur, etc....

Certains de ces accessoires tels que l'alternateur possèdent des inerties élevées. Ces inerties couplées avec un acyclisme engendrent des niveaux de couples dynamiques importants. Ces niveaux de couple se transforment en écart de tension très importants sur la courroie.
- Lorsqu'une courroie passe par des niveaux de tension trop bas elle peut avoir un glissement instantané suffisamment élevé pour glisser, ne pas entraîner et être bruyante.
- Lorsqu'une courroie possède un coefficient de frottement trop élevé, on peut observer un phénomène d'accrochage important puis de décrochage brusque générateur de bruit ("stick slip").
- Un troisième phénomène provoquant de la bruyance est le désalignement relatif de deux poulies successives. Ce phénomène est très dépendant de facteurs tels que :

- longueur de brin,
- nature des matériaux (module des gommes),
- dimensions de la courroie (épaisseurs des différentes couches),
- du coefficient de frottement entre la poulie et le flanc de la denture de la courroie.

Plus le coefficient de frottement est élevé, plus le bruit est important.

Le but du revêtement de la denture par un matériau non tissé est de réduire le coefficient de frottement.

Les solutions connues consistent à disposer un non tissé directement sur une ébauche non vulcanisée et ensuite de former une courroie par vulcanisation. Les Brevets US 4747812, US 4892510 et EP 774 597 proposent des courroies dont la denture est revêtue d'un non tissé moulé et vulcanisé sur celle-ci. Le non tissé est par exemple à base de pulpe et de rayonne.

Le Brevet US 6,793,599 propose un non tissé cellulosique moulé sur une gomme à fibres constituant la denture de la courroie. Le Brevet US 6824485 propose d'incorporer ('infuse') à un non tissé un composé élastomère qui est le même que celui de la denture.

La Demande de Brevet US 2004/214675 propose une courroie dont la denture est revêtue d'un tissé ou d'un non tissé, lui-même revêtu d'un film élastomère ou plastomère ayant un contenu élevé en éthylène.

Les procédés exposés dans les brevets précités ont pour inconvénient que, lors du moulage, le matériau cru de la gomme de dent passe à travers le non-tissé. Le caoutchouc de la gomme de dent se retrouve en surface au même niveau que les fibres du non tissé et peut générer des phénomènes de bruyance.

La Demande de Brevet EP-A-1180615 divulgue une courroie selon le préambule de la revendication 1, comportant une denture en élastomère pourvue d'une couche barrière et d'un revêtement externe.

L'invention concerne ainsi une courroie de transmission de puissance présentant une denture en élastomère à base d'élastomère éthylène alpha oléfine pourvue d'un revêtement externe tissé ou non tissé, **caractérisée en ce que** ladite denture est revêtue d'une couche barrière en thermoplastique élastomérique TPE ou TPV ayant une matrice polymère qui est la combinaison d'une matrice thermoplastique et d'une matrice élastomérique et en ce que, au moins sur les flancs de la denture, ledit revêtement externe est partiellement inclus dans une partie de l'épaisseur de la couche barrière.

Ainsi qu'il sera montré dans la suite de la description, la présence de cette couche de nature différente de celle de la denture et qui n'imprègne que partiellement le revêtement externe permet de faire barrière entre la gomme de dent et le revêtement tisse ou non-tissé, tout en assurant une solidarité mécanique de l'ensemble.

On notera en particulier qu'un élastomère à base d'éthylène-alpha-oléfine ne se prête pas à la réalisation de la couche barrière en raison notamment de ses propriétés très défavorables en ce qui concerne le bruit.

L'épaisseur de la couche barrière est avantageusement comprise entre 50 µm et 500 µm.

La couche barrière peut être en thermoplastique élastomérique TPE/TPV, qui peut présenter une matrice thermoplastique en TPO, notamment un polyéthylène basse densité LDPE et/ou une partie élastomérique en éthylène alpha oléfine notamment en EPDM.

La couche barrière peut être en un matériau thermoplastique oléfinique TPO, notamment polyéthylène haute densité HDPE, polyéthylène basse densité LDPE, ou bien POE.

La couche barrière peut être à base de polyéthylène PE et il peut présenter au moins 30% en poids dudit polyéthylène, notamment basse densité LDPE, notamment ayant une masse moléculaire entre 50000 g/mole et 200000 g/mole.

La couche barrière peut être en vernis polyuréthane ou bien en une colle notamment thermoplastique.

Le revêtement externe peut présenter un grammage compris entre 20g/m² et 120 g/m² et plus particulièrement entre 30g/m² et 90 g/m².

La courroie peut être **caractérisée en ce que** le revêtement externe est inclus sur 25% à 75%, notamment 50%, et plus particulièrement 30%, de l'épaisseur de la couche barrière.

Ledit élastomère à base d'éthylène alpha oléfine peut être un EPDM ou un EPM.

La couche barrière est avantageusement choisie pour avoir un dit effort à 50% d'allongement (par exemple essai de traction à température ambiante, c'est-à-dire 20°C sur des éprouvettes de tailles identiques) au moins 5 fois supérieur, et plus particulièrement entre 5 et 30 fois supérieur à celui de l'élastomère à l'état cru de la denture

De préférence, la couche barrière et le revêtement externe sont préalablement assemblés avant moulage notamment par doublage avant ou après calandrage, et laminage.

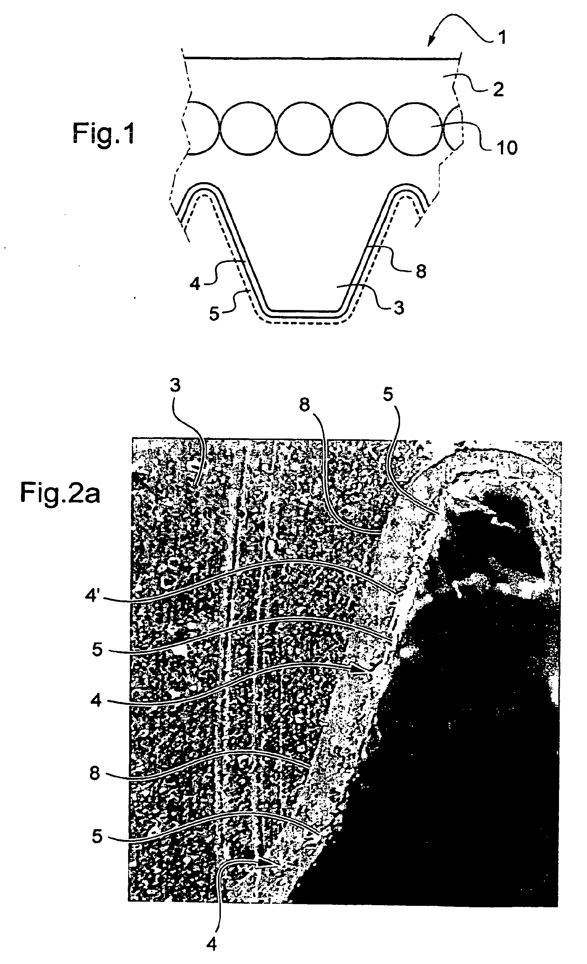

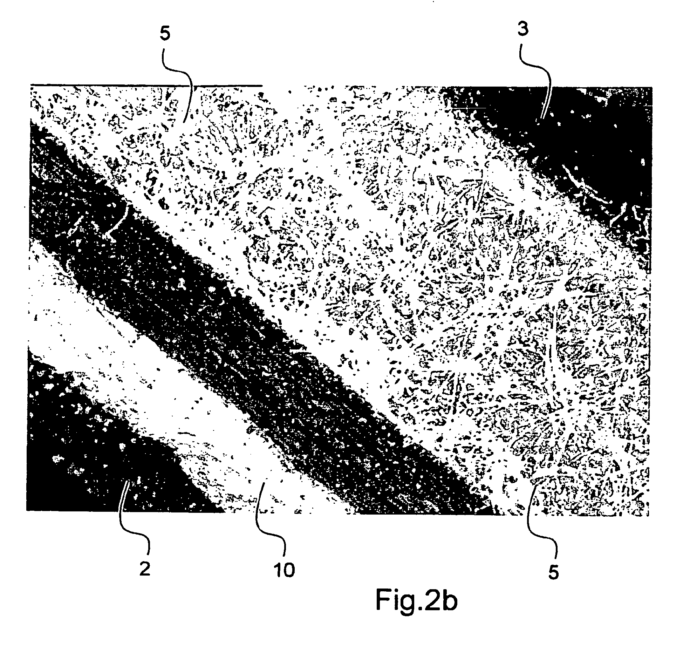

L'invention sera mieux comprise à la lecture de la description ci-après en liaison avec les figures 1 et 2a qui montrent en coupe un exemple de courroie nervurée de type K selon l'invention (figure 1) et une coupe localisée (figure 2b) de cette figure 1, les figures 2a et 2b étant des photos réalisées avec un revêtement en non tissé.

La courroie nervurée 1 représentée à la figure 1 présente une couche dorsale 2 dans laquelle sont noyés des fils de renfort 10 par exemple en polyamide, et des dents 3, dont une seule a été représentée. Les dents sont réalisées en une gomme de dent qui est ici à base d'éthylène alpha oléfine, notamment en EPDM ou en EPM. Les dents 3 sont revêtues d'une couche barrière 4, par exemple un film en thermoplastique élastomérique TPE/TPV.

La couche barrière 4 dont l'épaisseur est par exemple comprise entre 50 µm et 500 µm, plus particulièrement entre 100 µm et 200 µm (ou bien 300 µm) et de préférence sensiblement égale à 150 µm est recouverte par un revêtement non tissé 5 en partie noyé dans la couche 4, l'ensemble étant solidarisé au cours de la vulcanisation de la courroie.

La couche barrière 4 de départ peut être notamment en un matériau réticulable et être non réticulé ou au moins en partie réticulé.

La couche barrière 4 permet de faire barrière à la gomme de dent à l'état cru pendant le moulage. Le module à 50% d'allongement du film au début de formation de la denture est de préférence supérieur à celui de la gomme de dent crue, notamment entre 5 et 30 fois supérieur et de préférence 10 à 20 fois supérieur à celui-ci. Cette couche barrière 4 adhère en 8 à la gomme de dent sur la courroie moulée et vulcanisée. Une viscosité suffisante à la température de début de moulage peut être notamment obtenue avec un film thermoplastique, une colle notamment thermoplastique ou bien encore un vernis polyuréthane.

Selon l'invention, on utilise pour la couche barrière un film 4 en un thermoplastique élastomérique de type TPE /TPV dont la matrice de polymère est une combinaison d'une matrice thermoplastique TP et d'une matrice élastomérique, soit partiellement ou totalement réticulée (V ) formant alors un TPV, soit non réticulée ( E ) formant alors un TPE. L'élastomère (E/V) apporte la tenue au froid et le thermoplastique TP apporte une non bruyance relative et l'étanchéité . Dans la matrice TPE/TPV, on prendra un taux minimum d'élastomère de 25% en poids si on souhaite assurer une tenue à froid suffisante. Inversement, un taux d'élastomère trop important (plus de 80% en poids ) pourrait conduire à des difficultés de mise en oeuvre du film complet. Pour la partie élastomérique du film TPE/TPV, un éthylène alpha-oléfine tel que l'EPDM est particulièrement adapté. Pour la partie thermoplastique du film TPE/TPV, les TPO (thermoplastique oléfinique ) tels que LDPE, PP, PE, POE sont adaptés. Les LDPE sont préférés, car ils possèdent en particulier un caractère glissant.

Il est préférable que le film complet TPE/TPV puisse réticuler lors du moulage avec, par exemple, l'action du peroxyde ou autre agent de réticulation de la gomme de dent. Ceci crée une solidarisation avec l'éthylène alpha oléfine par exemple en EPDM qui constitue la gomme de dent et qui favorise l'adhérence du film à l'élastomère de la denture.

Un tel film, déjà conçu pour une adhésion optimum, pour faire barrière avec la gomme de dent possède néanmoins un coefficient de frottement suffisant pour qu'en cas de disparition localisée de fibres du revêtement non tissé 5, on conserve une immunité relative à la bruyance même si le film n'est pas intrinsèquement capable de répondre aux conditions sévères d'utilisation.

Le film et le revêtement non tissé 5 peuvent être préalablement assemblés notamment par calandrage et laminage.

La présence de la couche barrière 4 en thermoplastique élastomérique (TPE/TPV) permet, lors de la vulcanisation, par exemple au peroxyde, que les fibres du non tissé ne pénètrent que partiellement le film 4 et en tout cas ne pénètrent pas la gomme de dent qui passe de l'état cru à l'état vulcanisé.

On entend par "matériau thermoplastique" un matériau ayant une température de ramollissement supérieure à celle de l'élastomère constituant la denture, ceci afin d'éviter que la couche barrière thermoplastique (4) ne traverse complètement le revêtement externe (5).

En effet, si la température de ramollissement de la couche barrière thermoplastique (4) était inférieure à celle de l'élastomère constituant la denture, la couche barrière thermoplastique (4) fluerait et traverserait le revêtement externe (5) lors de la vulcanisation de la courroie, modifiant ainsi les propriétés tribologiques de la courroie.

L'ébauche de courroie formée d'un empilement de couches de gomme dont une face est revêtue du film 4 et du revêtement non tissé 5 est disposée dans un moule avec application d'une pression pour réaliser l'empreinte des dents et la vulcanisation de la courroie. La température de vulcanisation est de l'ordre de 180°C (elle peut être comprise entre 150°C et 200°C environ) et le film 4 se ramollit, ce qui lui permet d'une part de passer en 4' à travers les mailles du non tissé 5 pour former une liaison avec les fibres de ce dernier et d'autre part d'adhérer à la gomme de dent notamment par co-réticulation avec la gomme de dent , ce qui assure une tenue mécanique de l'ensemble.

Comme le montrent les figures 2a et 2b, on obtient un surmoulage partiel des fibres 6 du non tissé 5 dans le film 4, ce qui favorise la tenue des fibres à l'arrachement. Les fibres sont ancrées à une extrémité dans le film 4, alors que leur extrémité dépassante non-enduite dans le film 4 vient en contact avec les flancs de la poulie lors de l'utilisation de la courroie et permet d'éviter le phénomène de bruyance. Il en va de même avec un tissé. A la figure 2a, les fibres du non tissé 5 pénètrent jusqu'à environ 30% de l'épaisseur (200µm) de la couche barrière 4. De façon générale, la zone de la couche barrière 4 qui est exempte de fibres du non tissé représente 25% à 75% de l'épaisseur de la couche barrière. A la figure 2b , la présence des zones grises entre les fibres (en blanc) du non tissé 5 montrent que le matériau de la couche barrière 4 a pénétré entre les fibres pour jouxter la surface externe de la denture.

En d'autres termes, lors du moulage et de la vulcanisation, une partie du revêtement 5 se trouve surmoulée partiellement dans le film 4 favorisant la tenue à l'arrachement, une autre partie non-enduite se trouvant à l'extérieur en surface favorisant la réduction de la bruyance. La couche barrière 4 présente, entre le revêtement 5 et la dent 3 une région 4' dépourvue de fibres (ou de fils dans le cas d'un tissé).

Le revêtement 5 possède avantageusement un grammage minimum pour répondre aux exigences de bruit et ne pas dépasser un grammage maximum pour permettre un moulage sans difficulté de la dent avec le film en sous couche. On retiendra des grammages compris entre 20 g/m² et 120 g/m². Toutes choses égales par ailleurs, plus le revêtement tissé ou non tissé 5 est dense, moins il pénètre dans la couche barrière 4, et plus la couche 4 a un module élevé, et moins elle pénètre à travers les fibres ou les fils de la couche 4. On associera donc une couche 4 de module relativement élevé (par exemple PE haute densité) avec de préférence un revêtement de grammage faible., ou bien une couche 4 de module relativement faible (par exemple (POE)avec de préférence un tissu de grammage plus élevé (par exemple de l'ordre de 100 g/ m²).

Pour un film de départ non réticulé ou partiellement réticulé, le choix du taux de réticulation permet d'ajuster la viscosité et donc le module par rapport au matériau constitutif de la denture.

Une co-réticulation entre la couche barrière 4 et la gomme de la denture est favorisée par la présence éventuelle de polyéthylène dans la couche barrière 4.

Un autre type de film avantageux et qui présente intrinsèquement des propriétés anti-bruit est à base de polyéthylène, notamment exemple un film présentant au moins 30% en poids de polyéthylène et plus particulièrement comme décrit dans la Demande de Brevet WO 2007/99233 de la Société Demanderesse, un film comprenant au moins 30% de polyéthylène notamment basse densité (LDPE) ayant notamment une masse moléculaire entre 50000 g/mole et 200000 g/mole.

De la sorte, même au cas où localement, les fibres 6 viendraient à disparaître au cours de l'utilisation de la courroie, le film 4 assurerait de par ses propriétés une immunité relative à la bruyance.
Un tissé ou un non tissé à base de polyéthylène PE est particulièrement adapté car il permet une forte adhésion avec le film formant la couche barrière lors de l'opération de moulage vulcanisation et apporte des caractéristiques tribologiques adaptées à la non bruyance. Le PE, élément commun entre le non tissé et le film, favorise leur adhésion. Cependant un tissé ou un non tissé en PE seul pourrait perdre, pendant le moulage /vulcanisation, sa texture en maille non parfaitement plane qui est avantageuse en particulier pour régler les phénomènes de bruyance à l'humide (par exemple en cas de condensation). L'utilisation de fibres bi composantes dont l'extérieur est du PE et dont l'intérieur est un matériau à point de fusion supérieur à la température de moulage, c'est-à-dire à la température de vulcanisation de la denture, permet de garder la texture du non tissé à la surface du film.. Les matériaux tels que le polyéthylène téréphtalate PET, le polyamide PA ou bien un aramide sont bien adaptés à la construction de ce matériau tissé ou non tissé et répondent à ces exigences. Le PE se présente alors comme un enrobage extérieur à ces matériaux.

Suite au moulage / vulcanisation, une partie du tissé ou non tissé se trouve surmoulée partiellement dans le film favorisant la tenue à l'arrachement, une autre partie se trouvant à l'extérieur en surface favorisant la réduction de la bruyance. Une partie 4' de la couche barrière 4 est dépourvue de fibres du non tissé ou de fils du tissé. Le tissé ou le non tissé présente un grammage minimum pour répondre aux exigences de bruit et ne dépasse pas un grammage maximum pour permettre un moulage sans difficulté de la dent avec le film en sous couche. On retiendra par exemple des grammages compris entre 20 et 120 g/m².

Cet ancrage partiel peut être également obtenu en choisissant pour la couche barrière un film ou une couche (colle ou vernis) dont le module est supérieur à celui de la gomme de dent à l'état cru. Dans le cas d'un vernis ou d'un enduit, on laisse sécher ou évaporer le produit avant d'effectuer le moulage/vulcanisation.

Le module de la couche barrière 4 est choisi en général entre 5 et 30 fois supérieur au matériau (en général EPDM ou EPM) de la denture à l'état cru.

En effet, la gomme de dent à l'état cru n'est pas assez visqueuse et passe à travers le matériau tissé ou non tissé lors de la formation des dents par moulage dans un moule (à température ambiante en début de cycle). Il en résulte l'effet indiqué dans l'art antérieur que lors de la formation de la denture l'éthylène-alpha-oléfine de la denture vient se loger dans les interstices du matériau tissé ou non tissé. L'interposition d'une couche ou d'un film 4 de module (effort à 50% d'allongement plus élevé) plus élevé qui forme une couche barrière limite une interpénétration lors de la formation de la denture. Autrement dit, lors de la formation sous pression de la denture, la couche barrière 4 repousse le matériau 5 contre le bord du moule, sans que les fils ou les fibres qui le constituent ne pénètrent la couche barrière 5. Ensuite, l'ébauche est vulcanisée (vers 180°C) en maintenant la pression dans le moule. La gomme de dent réticule et acquiert ses propriétés définitives alors que la couche 4, sous l'effet de la température, voit en général son module baisser dans un rapport élevé qui, à titre indicatif peut être entre 8 et 25, ce qui fait que le film se trouve alors présenter un module suffisamment faible pour produire l'ancrage partiel des fils ou des fibres dans la couche barrière 4 en laissant subsister une région 4' dépourvue de fils ou de fibres. Lors du refroidissement, la couche barrière récupère son module adhère à la gomme de dent vulcanisée et sauf dans le cas d'un matériau réticulable tel qu'un film TPE/TPV, récupère son module. Une co-réticulation avec celle-ci (présence de fractions de polyéthylène dans la couche barrière) augmente l'adhésion à l'interface 8. Dans ce cas, le module de la couche barrière 4 augmente au fur et à mesure de sa réticulation.

La différence entre un tissé et un non tissé est que le tissé est à base de fils de grande longueur alors qu'un non-tissé est formé de fibres entrecroisées et liées localement entre elles et dont la longueur est par exemple entre 10 mm et 50 mm, par exemple 30 mm. Dans le cadre de la présente invention, un non tissé est préféré car il présente de meilleures propriétés lors de la formation par moulage des dents dans le moule à partir d'un ébauche crue.

Un film 4 de composition de type TPE ( LDPE )/TPV ( EPDM ) associé à un non tissé de grammage compris entre 30 et 90 g/m² dont les fibres présentent un enrobage en PE avec une âme en PET est particulièrement adapté.

L'invention s'applique aux courroies nervurées (trapézoïdales ou striées) et également aux courroies crantées dites courroies synchrones.

## Revendications

1. Courroie de transmission de puissance présentant une denture en élastomère à base d'élastomère éthylène alpha oléfine pourvue d'un revêtement externe tissé ou non tissé, **caractérisée en ce que** la denture (3) est revêtue d'une couche barrière (4) en thermoplastique élastométrique TPE/TPV ayant une matrice polymère qui est la combinaison d'une matrice thermoplastique et d'une matrice élastomérique et **en ce que**, au moins sur les flancs (8) de la denture (3), ledit revêtement externe (5) est partiellement inclus dans une partie de l'épaisseur de la couche barrière (4).

2. Courroie selon la revendication 1, **caractérisée en ce que** la partie élastomérique du thermoplastique élastomérique TPE/TPV est un éthylène alpha oléfine tel que l'EPDM.

3. Courroie selon une des revendications 1 ou 2, **caractérisée en ce que** la matrice thermoplastique du thermoplastique élastométrique TPE/TPV est un thermoplastique oléfinique TPO, notamment un polyéthylène basse densité LDPE.

4. Courroie selon une des revendications précédentes, **caractérisée en ce que** l'épaisseur de la couche barrière (4) est comprise entre 50µm et 500µm.

5. Courroie selon une des revendications précédentes, **caractérisée en ce que** le revêtement externe (5) est inclus sur 25% à 75%, notamment 50%, et plus particulièrement 30%, de l'épaisseur de la couche barrière (4).

6. Courroie selon une des revendications précédentes, **caractérisée en ce que** ledit élastomère de la denture à base d'éthylène alpha oléfine est un EPDM ou un EPM.

7. Courroie selon une des revendications précédentes, **caractérisée en ce que** le revêtement externe (5) est à base de polyéthylène.

8. Courroie selon une des revendications précédentes, **caractérisée en ce que** le revêtement externe comporte des fils ou des fibres bi composantes dont l'extérieur est en polyéthylène PE et dont l'intérieur est un matériau à point de fusion supérieur à la température de vulcanisation de l'élastomère de la denture

9. Courroie selon une des revendications précédentes, **caractérisée en ce que** le revêtement externe (5) a un grammage compris entre 20g/m² et 120g/m² et plus particulièrement entre 30g/m² et 90g/m².

## Patentansprüche

1. Kraftübertragungsriemen mit einer Verzahnung aus Elastomer auf Basis von Ethylen-[alpha]-Olefin-Elastomer, die mit einer gewebten oder nichtgewebten äußeren Beschichtung versehen ist, **dadurch gekennzeichnet, dass** die Verzahnung (3) mit einer Sperrschicht (4) aus thermoplastischem Elastomer TPE/TPV beschichtet ist, die eine Polymermatrix besitzt, welche die Kombination einer Thermoplastmatrix und einer Elastomermatrix ist, und dass zumindest an den Flanken (8) der Verzahnung (3) die äußere Beschichtung (5) teilweise in einem Teil der Dicke der Sperrschicht (4) eingeschlossen ist.

2. Riemen nach Anspruch 1, **dadurch gekennzeichnet, dass** der ElastomerTeil des thermoplastischen Elastomers TPE/TPV ein Ethylen-[alpha]-Olefin, wie etwa EPDM, ist.

3. Riemen nach einem der Ansprüche 1 oder 2, **dadurch gekennzeichnet, dass** die Thermoplastmatrix des thermoplastischen Elastomers TPE/TPV ein thermoplastisches Olefin TPO, insbesondere ein Polyethylen niedriger Dichte LDPE, ist.

4. Riemen nach einem der vorangehenden Ansprüche, **dadurch gekennzeichnet, dass** die Dicke der Sperrschicht (4) zwischen 50 µm und 500 µm beträgt.

5. Riemen nach einem der vorangehenden Ansprüche, **dadurch gekennzeichnet, dass** die äußere Beschichtung (5) in 25 % bis 75 %, insbesondere in 50 % und ganz besonders in 30 % der Dicke der Sperrschicht (4) eingeschlossen ist.

6. Riemen nach einem der vorangehenden Ansprüche, **dadurch gekennzeichnet, dass** das Elastomer der Verzahnung auf Ethylen-[alpha]-Olefin-Basis ein EPDM oder ein EPM ist.

7. Riemen nach einem der vorangehenden Ansprüche, **dadurch gekennzeichnet, dass** die äußere Beschichtung (5) auf Polyethylen-Basis besteht.

8. Riemen nach einem der vorangehenden Ansprüche, **dadurch gekennzeichnet, dass** die äußere Beschichtung Zwei-Komponenten-Garne oder -Fasern enthält, die außen aus Polyethylen PE und innen aus einem Material mit einem Schmelzpunkt bestehen, der über der Vulkanisationstemperatur von dem Elastomer der Verzahnung liegt.

9. Riemen nach einem der vorangehenden Ansprüche, **dadurch gekennzeichnet, dass** die äußere Beschichtung (5) eine flächenbezogene Masse von zwischen 20 g/m² und 120 g/m² und insbesondere von zwischen 30 g/m² und 90 g/m² besitzt.

## Claims

1. A power transmission belt presenting elastomer teeth based on ethylene alpha olefin elastomer provided with an outer woven or non-woven covering, the belt being **characterized in that** the teeth (3) are covered in a barrier layer (4), made of thermoplastic elastomer TPE/TPV having a polymer matrix which is the combination of a thermoplastic matrix and an elastomeric matrix, and **in that**, at least on the flanks (8) of the teeth (3), said outer covering (5) is partially included in a portion of the thickness of the barrier layer (4).

2. A belt according to claim 1, **characterized in that** the elastomeric portion of the elastomeric thermoplastic TPE/TPV is an ethylene alpha olefin, such as EPDM.

3. A belt according to claim 1 or claim 2, **characterized in that** the thermoplastic matrix of the thermoplastic elastomer TPE/TPV is a thermoplastic olefin TPO, in particular a low-density polyethylene LDPE.

4. A belt according to any preceding claim, **characterized in that** the thickness of the barrier layer (4) lies in the range 50 µm to 500 µm.

5. A belt according to any preceding claim, **characterized in that** the outer covering (5) is included over 25% to 75%, in particular 50%, and more particularly 30%, of the thickness of the barrier layer (4).

6. A belt according to any preceding claim, **characterized in that** said tooth elastomer based on ethylene alpha olefin is an EPDM or an EPM.

7. A belt according to any preceding claim, **characterized in that** the outer covering (5) is based on polyethylene.

8. A belt according to any preceding claim, **characterized in that** the outer covering includes two-component yarns or fibers having an outside made of polyethylene PE and an inside made of a material having a melting point higher than the vulcanization temperature of the tooth elastomer.

9. A belt according to any preceding claim, **characterized in that** the outer covering (5) presents weight lying in the range 20 g/m² to 120 g/m², and more particularly in ppthe range 30 g/m² to 90 g/m².
